# EUROPEAN PATENT APPLICATION

(11) **EP 4 609 989 A1**
(43) Date of publication of application: **03.09.2025**
(21) Application number: 24160113.7
(22) Date of filing: 27.02.2024
(51) Int. Cl.: B24B 19/14, B24B 27/00, B24B 41/02, B29C 33/34, B29C 70/54, B29D 99/00, F03D 1/06

(54) **MACHINING A ROOT PORTION OF A WIND TURBINE BLADE**

(71) Applicant: LM Wind Power A/S, 6000 Kolding (DK)
(72) Inventor: ROBERTS, David, Ottawa K1J 9L8 (CA); RONDEAU, Louis, Greenville, SC 29615 (US); HART, Bruce, deceased (CA)
(74) Representative: Bardehle Pagenberg S.L.

(57) **Abstract**

The present disclosure relates to methods for machining, e.g. grinding a root portion of a wind turbine blade, which comprises attaching a machining device at or near a root of the wind turbine blade, with the wind turbine blade being arranged on one or more movable supports. The method further comprises moving the movable supports to transport the wind turbine blade and operating the machining device to machine a root portion of the wind turbine blade while transporting the wind turbine blade. The present disclosure further relates to machining devices suitable for such methods.

## Description

### FIELD

The present disclosure relates to wind turbine blades, and to methods for manufacturing wind turbine blades. The present disclosure particularly relates to a method for machining bushings in a root of wind turbine blades and devices suitable for such a method.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer and are usually manufactured as shell parts in molds, side, where the top side and the bottom side of the blade profile (typically the upwind or pressure side and the downwind or suction respectively) are manufactured separately by arranging glass fiber mats in each of the two molds and injecting a liquid resin, which subsequently is cured. Afterwards, the two blade shell parts or blade halves are glued together, often by means of internal flange parts. Glue is applied to the inner face of the lower blade half before the upper blade half is lowered thereon or vice versa. Additionally, one or more reinforcing profiles (shear webs), extending along the length of the blade, are often attached to the inside of the lower blade half prior to gluing to the upper blade half.

It is known to manufacture wind turbine blades where each of the wind turbine blades are molded and assembled at the same workstation. The wind turbine blade may then be moved to another workstation, typically a finishing workstation, where the wind turbine blade is cut, trimmed, painted and the final fittings are mounted on the wind turbine blade.

One of the manufacturing processes that typically needs to be carried out after molding of the blade is the grinding of the root of the blades. A plurality of bushings may be embedded or otherwise arranged in the fiber reinforced composite material of the root of the blade. These bushings can subsequently be used for mounting the blade to the wind turbine hub or more particularly to a pitch bearing of the wind turbine hub. Suitable studs may be introduced into the bushings for this mounting.

For further arrangement of the mounting flange on the wind turbine blade, the bushings need to have the same length. For this purpose, a process of "root grinding" or "root milling" may be carried out. In general, the flatness of the root of the blade is important for posterior mounting, even for roots that have no bushings. It is further important that the root is not only flat, but also that the root plane is not inclined.

The blade may be arranged on two supports: one support may be arranged at or near the root and another support may be arranged closer to the blade tip. A grinder may be attached to an inside of the blade near the blade root using a plurality of braces, e.g. a tripod arrangement. The grinder comprises an arm that is rotatable about a central axis carrying a grinding wheel. The grinding wheel rotates at a high speed. As the arm rotates, the grinding wheel comes into contact with the bushings and in this manner can grind each of the bushings around the circumference of the blade to the desired length.

The grinder is connected with a suitable electrical power supply and hydraulics through suitable cables. One or more operators may monitor and oversee the process and make adjustments e.g. by axially displacing the grinding wheel to shorten the bushings in subsequent steps.

In a root milling process, one or more milling devices are generally provided on a frame. The milling devices can move horizontally and vertically and typically mill the bushings to a desired length one-by-one. A milling device typically uses rotary cutters to remove material by advancing a cutter into the workpiece.

As the demand for wind turbines is rapidly increasing, it is found increasingly difficult to scale the above-described conventional manufacturing method to accommodate the demand for several reasons: Firstly, the usual manufacturing method requires that all the materials required for manufacturing a wind turbine blade, e.g. resin and fiber reinforcement material, be transported to every workstation, which is logistically demanding. Secondly, every workstation has to be equipped with tools necessary for every single manufacturing step in the process, which results in a significant overhead. Additionally, the usual manufacturing method requires a mold in every single workstation, which is expensive since production and maintenance of molds are time consuming and thus expensive. Furthermore, the conventional manufacturing method occupies a lot of space, and since the workers at each workstation have to perform a variety of manufacturing steps, there is a risk that the quality of the manufactured wind turbine blades may suffer.

So far, wind turbine production however still relies on the above-mentioned manufacturing methods. EP2403708 proposes an alternative manufacturing method and an alternative manufacturing line involving "moving molds". In this prior art document, a manufacturing line is disclosed, wherein wind turbine blades are formed in a number of mold sets, each of the mold sets comprising at least a first mold comprising a first mold cavity. The manufacturing line further comprises a number of separate workstations, where separate manufacturing steps are carried out. In particular, a sequence of steps in different workstations may be carried out to manufacture each of the blade shell parts. Once manufactured, the two blade shell parts are moved to a separate workstation where they are adhered to each other, e.g. by gluing flanges located at the leading edge and trailing edge of the finished wind turbine blade. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method in EP2403708 furthermore provides that each workstation can be equipped with specialized and advanced equipment that is dedicated to the manufacturing step carried out at each workstation. Additionally, each workstation can be manned with specialized workers that are skilled and trained in the manufacturing step carried out at that particular workstation, which lowers quality risks. However, some of the workstations can also be automated, e.g. by using robots, such that fewer workers are needed. Automation is also expected to additionally improve the quality of the manufactured wind turbine blades.

The present disclosure provides examples of methods and systems that provide improvements over prior art wind turbine blade manufacturing.

### SUMMARY

In a first aspect of the present disclosure, a machining device for machining a root portion of a wind turbine blade is provided. The machining device comprises a base for operatively coupling the machining device to the wind turbine blade, and further comprises an electrical power supply for powering operation of the machining device configured to move with the base.

In accordance with this aspect, a machining device is provided which can be operatively coupled to a wind turbine blade and allows machining operations to be carried out while the wind turbine blade is moving, i.e. while the wind turbine blade is being transported. A movable electrical power supply is provided which is capable of supplying the machining device with the electrical power necessary while the blade is moving.

An electrical power supply is herein to be regarded as an electrical power source or as an electrical connection receiving power from a power source.

"Machining" as used herein is to be understood as covering both "milling" and "grinding". A "machining device" as used herein is to be understood as covering both a milling device or a "miller", as well as a "grinder" or grinding device.

"Operatively coupling" as used herein is to be understood as any direct or indirect coupling which establishes corresponding movement with the wind turbine blade i.e. when the wind turbine blade moves forward or rearward, so does the machining device. Operative coupling can be established by a direct attachment to the wind turbine blade or by an attachment to a movable support supporting the blade. The machining device may be entirely supported by the wind turbine blade or movable support. Alternatively, the machining device may include rollers, wheels, gliders, skates or any other means which allows the machining device to move along with the movable support.

In a further aspect of the present disclosure, a method for machining a root portion of a wind turbine blade is provided. The method comprises operatively coupling a machining device at or near a root of the wind turbine blade, the wind turbine blade being arranged on one or more movable supports and moving the movable supports to transport the wind turbine blade. The method further comprises operating the machining device to machine a root portion of the wind turbine blade while transporting the wind turbine blade.

In accordance with this aspect, a method of machining a root portion is provided which allows optimization and increase of throughput of a production line, particularly a production line with moving molds. Traditionally, a root grinding or milling operation requires a wind turbine blade to remain in a fixed position. In a production line with moving molds, the root grinding operation would thus occupy a workstation. By carrying out the root grinding operation as the blade is transported, space at a workstation becomes available and downstream molds and blades may be moved further upstream.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations.

In examples of the present disclosure, after a blade, or a blade shell, has undergone the operations assigned to a specific workstation, the mold with the blade or blade shell may be discharged from the workstation, e.g. it may be conveyed to the next workstation. Each of the workstations may include one or more production tools. A workstation may also be regarded as a "cell" of a production line.

As used throughout the present disclosure, a "production line", or "manufacturing line" may be regarded as a group of workstations which are generally arranged in the same geographical location i.e. at a manufacturing site such as a factory. The production line may in particular include an assembly of two half shells and the end product of the production line may be a finished blade, or almost finished blade (which only requires minor finishing operations).

Throughout this disclosure, the words operations and steps may be used interchangeably to refer to the manufacturing activities required for blade manufacturing. Furthermore, the operations or steps may refer to any such activity. In particular, by way of non-limiting examples, operations may include arrangement of glass fiber mats on a blade mold, resin infusion of glass fiber mats, attachment of one or more shear webs inside the blade, gluing of two blade halves to obtain a closed blade, demolding of an already closed blade from the blade mold or finishing operations such as painting, trimming or sanding.

### BRIEF DESCRIPTION OF THE DRAWINGS

Figure 1 illustrates a perspective view of an example of a wind turbine;
Figures 2A - 2C illustrate a perspective view of an example of a wind turbine blade and an example of an internal structure of a wind turbine blade;
Figure 3 schematically illustrates a production line involving moving molds;
Figure 4A schematically illustrates an example of a grinding device;
Figure 4B schematically illustrates another example of a grinding device;
Figure 4C schematically illustrates an example of a milling device; and
Figures 5A and 5B schematically illustrate examples of methods for grinding a root portion of a wind turbine blade.

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

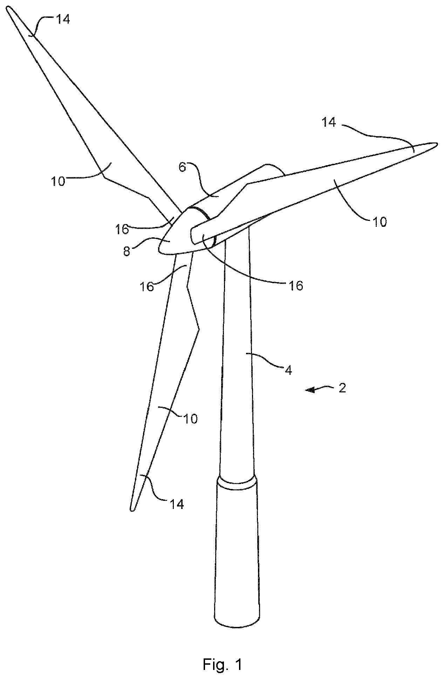

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

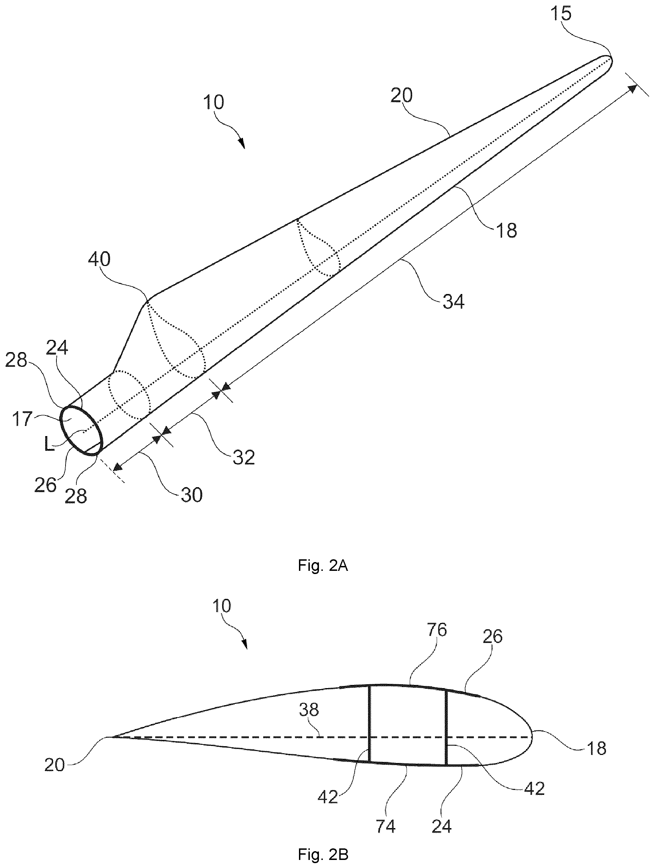

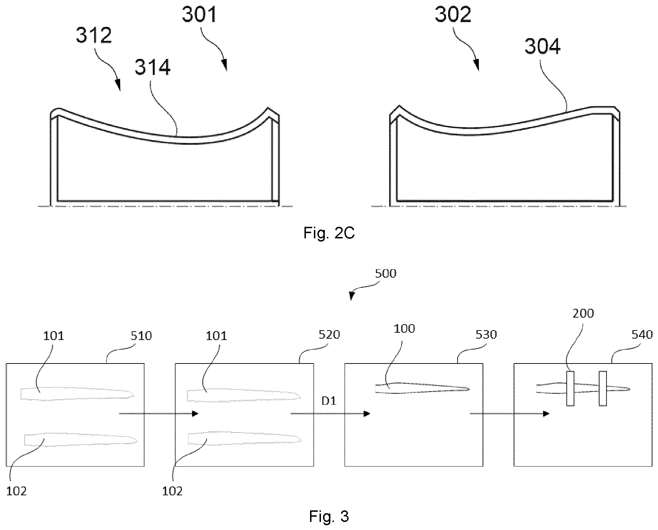

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub 8. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 may comprise a blade shell comprising two blade shell parts (also referred to as half shells or blade halves), a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross-sectional view of an example of a wind turbine blade 10, e.g. a cross-sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. Other configurations with more or less shear webs are also known and can also be used. The spar caps 74, 76 may comprise carbon fibers while the rest of the shell parts 24, 26 may generally comprise glass fibers.

Fig. 2C is a schematic diagram illustrating an example of a traditional mold system for molding a blade shell of a wind turbine blade. The mold system 301 comprises a first mold 302 and a second mold 312. The first mold 302 is configured for manufacturing a first blade shell part of a wind turbine blade, such as an upwind shell part of the wind turbine blade (forming the pressure side). The second mold 312 is configured for manufacturing a second blade shell part of the wind turbine blade, such as a downwind shell part of the wind turbine blade (forming the suction side). Surfaces 304 and 314 are mold surfaces for depositing fibers.

After deposition of fibers, the molds may be infused with resin e.g. using a process called VARTM ("Vacuum Assisted Resin Transfer Molding"). So-called spar caps or "main laminates" may be joined to the shells. In a subsequent operation, the blade halves may be joined together by placing one half on top of the other and joining them at the leading and trailing edges, as well as by joining the blade halves to the shear web(s) previously positioned in one of the blade halves.

Figure 3 schematically illustrates a portion of an example of a production line 500 for manufacturing wind turbine blades involving "moving molds".

The production line 500 comprises a first mold 101 having a first mold cavity and a second mold 102 having another mold cavity. Both the first mold 101 and the second mold 102 may be arranged at a first workstation 510. The first workstation may include one or more first tools for introducing materials into the first mold cavity and/or for carrying out a manufacturing operation on the materials arranged in the mold cavities.

The first and second molds 101, 102 may be used for the manufacture of blade halves in this example.

When the operations assigned to the first workstation have been carried out, the molds 101 and 102 may be conveyed to a second workstation 520. The second workstation may comprise second tools for introducing materials into the mold cavities and/or for performing manufacturing operations on the materials arranged in the mold cavities.

Although not further illustrated, as the first and second molds 101 and 102 are conveyed to the second workstation, the first workstation becomes "free" or available. Further molds may then be conveyed to the first workstation. Operations may be carried out in the first workstation on those molds and materials simultaneously with the operations carried out on the molds and materials in the second workstation.

It should be clear that only a limited number of workstations is illustrated in figure 3. An actual production line may comprise more workstations. In a non-limiting example, a first workstation may be e.g. a gelcoat station, a second workstation may be a fiber deposit workstation, the third workstation may be for resin infusion and a fourth workstation may be used for "closing the molds", i.e. for positioning one blade half on top of another and for joining the blade halves to each other. In other examples, the various manufacturing steps and operations may be divided over a different number of workstations. In some examples, some manufacturing steps may be carried out during transport of a mold from one workstation to another.

Conveying the molds from one workstation to another may be done with any suitable conveyor system. The molds may include e.g. wheels or rollers or skates. The molds may be conveyed along tracks or other guides in some examples. The conveying direction D1 has been schematically indicated with arrows. In examples, at least some workstations may be arranged along a straight line such that conveying the molds along the straight line is facilitated, but it should be clear that not all workstations need to be arranged along a straight line.

At least part of the first and second half shells may be manufactured in the first and second workstations 510, 520. The first and second molds 101, 102 may be conveyed from the first workstation 510 to the second workstation 520 together e.g. at a same time or separately e.g. at a different time. In the example illustrated in figure 3, the first and second molds are conveyed at a same time from the first workstation 510 to the second workstation 520.

In this particular example, each workstation of the production line may be prepared to work with two molds simultaneously, one for the upwind shell and one for the downwind shell. In other examples, downwind shells and upwind shells may be manufactured in different workstations.

As mentioned before, a different number of workstations may be used in different examples. After completing substantially all operations to be carried out on the separate blade halves, the blade halves may be joined to each other. In the depicted example, the blades may be joined to each other at workstation 530.

After the blade halves have been joined to each other, several post-processing steps may be carried out. One such post-processing step is the grinding of the root of the blade, i.e. grinding the bushings at the root of the blade down to a predetermined length such that the ends of all bushings are arranged substantially in the same plane.

In the illustrated example, further post-processing steps include e.g. testing or inspection of the blade. The production line 500 of this example further comprises one or more NDT stations 540 configured to carry out Non-Destructive Testing and an assembled blade conveyor system for conveying an assembled wind turbine blade through the one or more NDT stations 540. The NDT station 540 may comprise e.g. a gantry 200 with several sensors and measuring systems.

In some examples, the assembled wind turbine blade 100 may be conveyed from the closing workstation 530 of the production line 500 such that it passes through one or more NDT workstations 540 configured to carry out non-destructive testing. In other examples, intermediate workstations may be arranged between the closing workstation and the NDT workstation(s).

In examples, the assembled blade may be conveyed while positioned in a blade mold. In further examples, after lifting the blade out of the blade mold 100, the blade mold may be moved away (e.g. returned to a first workstation of the production line to be used in the manufacture of another blade) and one or more blade carts or blade wagons may be arranged underneath the lifted blade. A cart or wagon may herein be regarded as any open vehicle with wheels suitable for carrying a load. One cart may be arranged at or near the blade root and another cart may be arranged closer to the tip, e.g. at a position of about 50%, 60% or about 70% of the length of the blade.

In some examples, after NDT inspection (or other inspection) of the assembled wind turbine blade, the blade may be conveyed to a finishing workstation, where some final operations may be performed to the blade. In some examples, the blade may be trimmed, grinded and/or painted and final fittings e.g. lightning connectors and/ or bulkheads may be installed on the wind turbine blade. In other examples, flaws detected during the inspection may be taken care of. After carrying out such operations, in some examples the assembled blade may then be conveyed to or through another inspection workstation so it may be ensured that all the internal technical features of the blade meet their requirements.

In some examples, in a final step of the production line, the assembled wind turbine blade may be weighted, balanced and shipped.

The aforementioned root grinding or milling operation may be carried out before, or after or even during inspection of the blades at workstation 540.

In the production line with moving molds such as in the example of figure 3, it is beneficial for the throughput of the production line to keep the molds moving and to carry out operations while the blades/molds are moving. In examples of the present disclosure, root grinding may be carried out as the blade is moving and e.g. as the blade is moving through the NDT workstation(s) and inspections are being carried out. In examples, root grinding may be carried out at the same time as other operations are being carried out while the blade is moving.

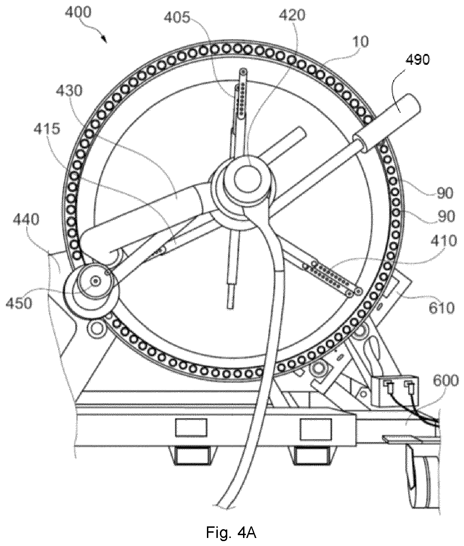

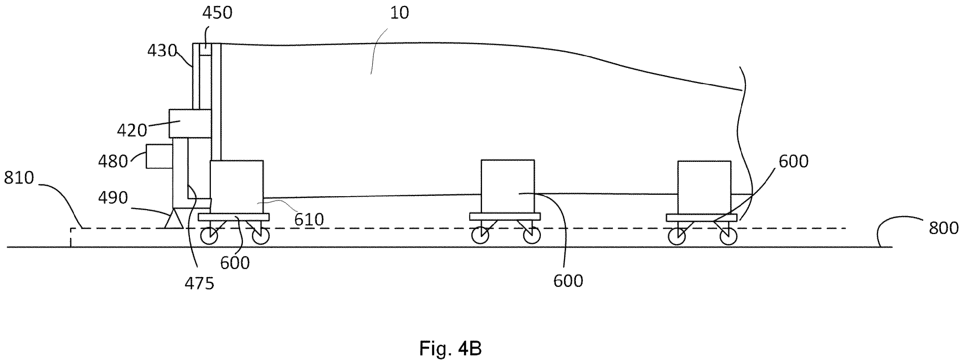

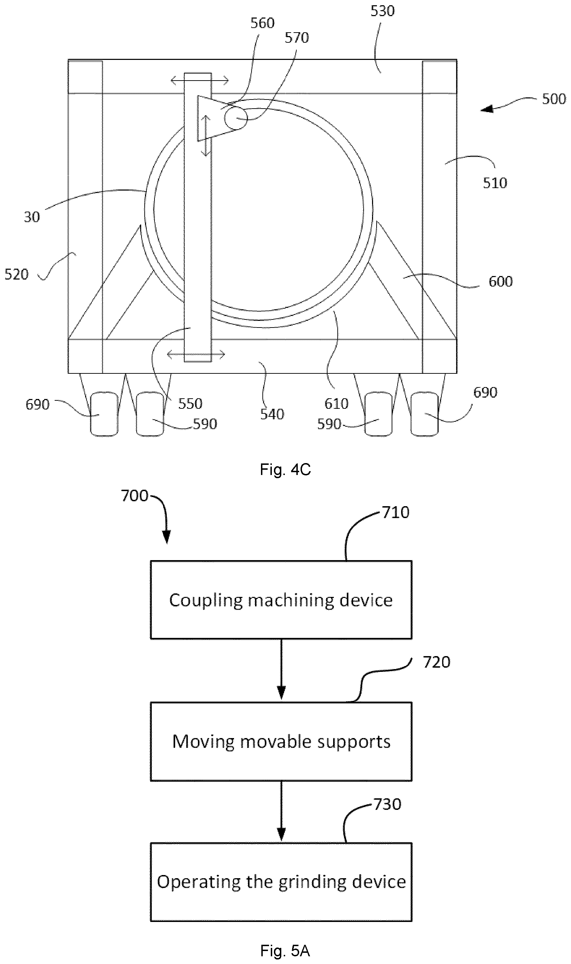

Figure 4A schematically illustrates an example of a grinding device 400. Figure 4 shows a view of a root of the wind turbine blade 10. It may be seen that in this example, the wind turbine blade 10 is arranged on a support 600. In this particular example, the support 600 may be a cart, wagon or wheeled platform including a root support 610 which may be shaped as a cradle for receiving the root.

The grinding device 400 for grinding a root portion of a wind turbine blade comprises a base for attaching the grinding device to the wind turbine blade and a hub 420 attached to the base. In other examples, the base may be configured to attach e.g. to a cart or wagon supporting a root region of the wind turbine blade.

The device 400 in this example further comprises an arm 430 rotatably mounted to the hub 420 and a grinding wheel 440 mounted on the arm 430. The grinding device 400 further comprises an electrical power supply for powering operation of the grinding device configured to move with the base.

The base in this example comprises three braces 405, 410, 415 which radially extend from hub 420 and which engage with an inner surface of the root of the wind turbine. The function of the base is to firmly attach the device to the wind turbine blade, and to support the arm 430 and grinding wheel 440. In further examples, a power supply and/or hydraulic systems and/or a control module may be arranged with the hub 420.

The arm 430 is configured to rotate about hub 420. The hub 420 may comprise a suitable motor and drive mechanism to this effect. In examples, a gearbox may be arranged between such a motor and drive mechanism to drive arm 430 with a suitable torque and speed. A suitable drive mechanism may include a pinion meshing with an annular gear, or an annular gear meshing with a pinion. It will be clear that various suitable ways of driving the arm may be provided.

In this example, a grinding wheel 440 may be mounted at or near a distal end of arm 430. The grinding wheel may have its own dedicated drive 450, e.g. a suitable motor.

In operation, arm 430 may be rotated about hub 420. The grinding wheel 440 is thus brought into proximity of bushings 90 along the circumference of the root of the wind turbine blade 10. The grinding wheel is rotated at high velocity to grind down the subsequent bushing to the same desired length.

The grinding device 400 of this example further comprises a counterweight 490 substantially diametrically opposite to the arm 430 and grinding wheel 440. The counterweight 490 is also rotatably mounted about the hub 420.

As the grinding operation is carried out, the wind turbine blade may be moved. The movable support 600 (and further movable supports if present) may be set in motion. As the wind turbine blade is transported, the grinding operation may continue. A suitable power supply for the various operations may include a portable battery or a portable electric generator which is transported with the grinding device 400. In some examples, the portable battery or electric generator may be carried by movable support 600, and may be removably mounted thereto.

Figure 4B schematically illustrates another example of a grinding device. The grinding device is similar to the previous example, in that the device comprises a hub 420 and a rotatable arm 430. Near the end of the rotatable arm 430, a grinding wheel 450 is arranged with its own drive.

In this example, the hub 420 may be coupled to the movable support 60 through a structural support 475.

In this particular example, the grinding device 400 may include a contact shoe 490 for contacting a power line, e.g. a rail 810 which may be arranged at or close to floor level 800. As the movable support 600 and wind turbine blade 400 are moved, the contact shoe may slide along the rail or other power line to thereby continuously provide power for the grinding operation. In some examples, such a contact shoe may be incorporated in one of the movable supports, particularly in the movable support supporting a root portion of the wind turbine blade.

In this example, the grinding device may comprise one or more hydraulic actuators and a reservoir 480 of hydraulic fluid. The reservoir of electric fluid may form part of the grinding device 400 or in other examples may be arranged with the movable support 600.

As the grinding operation is carried out, it may be necessary to move the grinding wheel axially forward (i.e. in the direction of the longitudinal axis of the blade) with respect to arm 430. The grinding device 400 may further comprise a positioning mechanism configured to adjust an axial position of the grinding wheel with respect to the arm. E.g. a servomotor or linear electric actuator may be used for this purpose.

In examples, the grinding device 400 may further comprise a sensor system for determining a length of one or more bushings arranged at the root of the wind turbine blade 10, and a control for adapting operation of the grinder at least partially based on the determined length of the bushings.

A suitable sensor system may include one or more cameras and suitable video processing software. Other suitable sensor systems may also be used. By determining the length of the bushings, it may be determined that a grinding operation may be finished and/or that the grinding operation may be adjusted. E.g. the grinding wheel may be moved axially forward with respect to arm 430 once the bushings have been milled down to a specific length.

In any of the examples of figure 4A and 4B, the grinding device may be lifted by a crane or forklift in order to couple the machining device to the blade or to the cart supporting it. Alternatively, the grinding device may be configured to lift or raise itself autonomously i.e. it might include a hydraulic lifting mechanism.

Figure 4C illustrates another example of a machining device. A rear view of a root 30 of a wind turbine blade is shown supported on a cart 600. The cart 600 comprises cradle like support 610 for receiving the root 30.

In this example, the machining device comprises a base configured to be coupled to a cart 600. The base may be formed by a frame 500. Frame 500 comprises two vertical posts 510, 520 and two horizontal beams 530, 540. Column 550 may be configured to displace horizontally and is guided by horizontal beams 530, 540.

Milling device 560 comprises a cutting tool 570, which may have its own dedicated drive. Milling device 560 is vertically displaceable along column 550. The milling device 560 can thus move both vertically (along the column) and horizontally (by displacing the column). Different areas of the root 30 can thus be reached with the cutting tool 570.

The cart 600 in this example comprises wheels 690 allowing its transport. In this example, the machining device may also include its own wheels 590. Alternatively skates, rollers or other means may be foreseen.

The machining device may be coupled to the cart 600. A crane or forklift may be used to couple the machining device to the cart 600. In other examples, the machining device may include a lifting mechanism, e.g a hydraulic lifting mechanism to lift the machining device for coupling to the cart 600. When the cart 600 moves, the machining device can "piggyback" and tag along and move along with the cart. In some examples, the machining device may include its own propulsion system.

As the wind turbine blade is being transported, the milling operation may be carried out. It should be clear that the frame with vertical posts and horizontal beams acting as guides is just one example. In another example, one or more vertical columns may be movable horizontally along e.g. a lower horizontal beam or guide. Each of the columns may comprise a milling device that can vertically displace along the column. E.g., one, two or four milling devices could be used to machine different areas of the blade root. If multiple milling devices are used, the time necessary for the milling operation can be reduced.

In any of the herein disclosed examples, the machining device may be configured to connect to the cart e.g. with a male-female coupling.

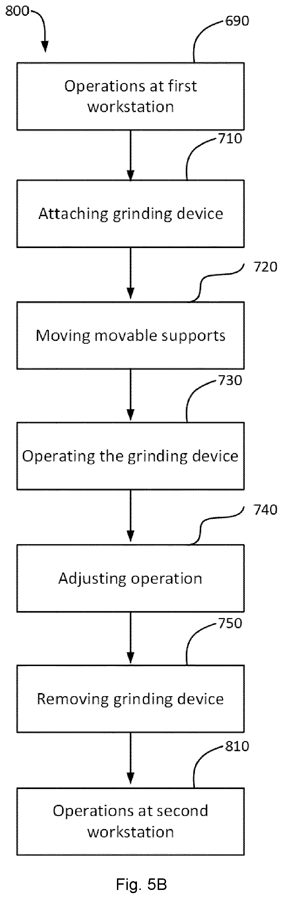

Figures 5A and 5B schematically illustrate examples of methods for grinding a root portion of a wind turbine blade. In an aspect of the present disclosure, a method 700 for machining a root portion of a wind turbine blade is provided. Method 700 comprises, at block 710, operatively coupling a machining device to the wind turbine blade. The wind turbine blade may be arranged on one or more movable supports as illustrated e.g. in figure 4.

Operatively coupling the machining device may include coupling or attaching the machining device to one of the movable support, e.g. a cart or wagon supporting a root portion of the wind turbine blade. Operatively coupling may additionally or alternatively include attaching the machining device to the wind turbine blade itself.

Method 700 further comprises, at block 720, moving the movable supports to transport the wind turbine blade and, at block 730, operating the machining device to grind a root portion of the wind turbine blade while transporting the wind turbine blade. In some examples, the movable supports may already be moving before starting to operate the machining device. In other examples, the movable supports may start moving only after the machining device has started its operation. Still in other examples, both may be started at substantially the same time, i.e. as the wind turbine blade starts to move, the machining operation is started.

In examples, a grinding device or milling device as illustrated in any of the examples of figure 4 may be used. Examples of the method 700 may be incorporated in a production line with moving molds such as the production line schematically illustrated in figure 3. In examples, such a method may be carried out as the wind turbine blade is being transported from a first workstation to a second workstation.

Figure 7B illustrates an example of a method for grinding a root portion of a wind turbine blade. It will be clear that the same method could be carried out with any of the examples of milling devices disclosed herein.

Method 800 may comprise, at block 690, carrying out one or more operations at a first workstation. The first workstation should herein not be understood as necessarily the very first workstation of a production line. The first workstation may be in fact an NDT station, a painting workstation or the previously mentioned closing workstation.

After the operations of the first workstation have been completed, a grinding device may be attached in the region of the root of the wind turbine blade, at block 710. At block 720, the movable supports may start to move to the next workstation and at block 730, the grinding device is operated. As the wind turbine blade is transported from a first workstation to a second workstation, the root grinding operation is carried out. Again, the second workstation should herein not be understood as necessarily the second workstation of the complete production line. Rather, the second workstation may be understood as the workstation that is arranged downstream from the first workstation.

In some examples, grinding of the root portion is completed before the wind turbine blade reaches the second workstation. In other examples, grinding of the root portion is only completed after arriving at the second workstation.

The method may further comprise removing the grinding device, at block 750. Particularly, the grinding device may be arrived after arrival at the second workstation. The grinding device may be transported or conveyed back to the first workstation, e.g. through guides or tracks or with the use of a forklift, crane or other machinery. After removal of the grinding device, operations at a second workstation may be carried out at block 810.

In some examples, the method may further comprise, while transporting the wind turbine blade: determining a length of one or more bushings at the root portion of the wind turbine blade and, at block 740, adjusting an operation of the grinding device at least partially based on the length of the bushings.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. A machining device for machining a root portion of a wind turbine blade comprising:
a base for operatively coupling the machining device to the wind turbine blade; and
an electrical power supply for powering operation of the grinding device configured to move with the base.

2. The machining device of claim 1, wherein the base is adapted to be coupled to a movable support supporting the wind turbine blade.

3. The machining device of claim 1 or 2, wherein the machining device comprises a frame, and a root milling device which is movable with respect to the frame along two perpendicular directions, and further comprises a cutting tool.

4. The machining device of claim 1 or 2, wherein the machining device is a grinding device, and the base is configured to be attached to the wind turbine blade and the machining device further comprises:
a hub attached to the base;
an arm rotatably mounted to the hub;
a grinding wheel mounted on the arm.

5. The grinding device of claim 4, wherein the grinding wheel is axially movable with respect to the arm and the grinding device further comprises:
a positioning mechanism configured to adjust an axial position of the grinding wheel with respect to the arm; a sensor system for determining a length of one or more bushings arranged at a root of the wind turbine blade, and
a control for adapting operation of the grinder at least partially based on the determined length of the bushings.

6. The machining device of any of claims 1 - 5, wherein the electrical power supply is a battery or a portable electric generator or, wherein the electrical power supply comprises a contact shoe configured to contact a power line.

7. The machining device of any of claims 1 - 6, further comprising one or more hydraulic actuators and a reservoir of hydraulic fluid.

8. The machining device of any of claims 1-7, wherein the electrical power supply is incorporated in a movable support configured to transport the wind turbine blade.

9. A method for machining a root portion of a wind turbine blade, the method comprising:
operatively coupling a machining device with the wind turbine blade, the wind turbine blade being arranged on one or more movable supports;
moving the movable supports to transport the wind turbine blade;
operating the machining device to machine a root portion of the wind turbine blade while transporting the wind turbine blade.

10. The method of claim 9, wherein the wind turbine blade is transported from a first workstation to a second workstation and the method further comprising:
carrying out one or more first operations at the first workstation; and
carrying out one or more second operations at the second workstation.

11. The method of claim 9 or 10, wherein machining of the root portion is completed before the wind turbine blade reaches the second workstation.

12. The method of any of claims 9 - 11, wherein at least one of the movable supports of the machining device comprises a portable electrical power supply.

13. The method of any of claims 9 - 12, wherein operatively coupling the machining device to a wind turbine blade comprises coupling the machining device to one of the movable supports.

14. The method of any of claims 9 - 13, wherein the machining device is a grinding device.

15. The method of claim 14, further comprising while transporting the wind turbine blade:
determining a length of one or more bushings at the root portion of the wind turbine blade;
adjusting an operation of the grinding device at least partially based on the length of the bushings.
